# EUROPEAN PATENT SPECIFICATION

(11) **EP 4 339 502 B1**
(45) Date of publication and mention of the grant of the patent: **27.05.2026**
(21) Application number: 22382846.8
(22) Date of filing: 13.09.2022
(51) Int. Cl.: F17C 3/08

(54) **A DOUBLE-WALL TANK COMPRISING A FLUID CHANNELLING SYSTEM AND AN ASSEMBLING METHOD OF SAID DOUBLE-WALL TANK**
DOPPELWANDIGER TANK MIT EINEM FLUIDKANALSYSTEM UND MONTAGEVERFAHREN FÜR DEN DOPPELWANDIGEN TANK
RÉSERVOIR À DOUBLE PAROI COMPRENANT UN SYSTÈME DE CANALISATION DE FLUIDE ET PROCÉDÉ D'ASSEMBLAGE DUDIT RÉSERVOIR À DOUBLE PAROI

(43) Date of publication of application: 20.03.2024
(73) Proprietor: Airbus Operations, S.L.U., 28906 Getafe (Madrid) (ES)
(72) Inventor: VÁZQUEZ CASTRO, Jesús Javier, E-28906 Getafe, Madrid (ES); RODRÍGUEZ URBINA, Luis Manuel, E-28906 Getafe, Madrid (ES); BALLESTERO MÉNDEZ, Jorge, E-28906 Getafe, Madrid (ES)
(74) Representative: ABG Intellectual Property Law, S.L.

(56) References cited:
- CN-A- 112 344 202
- US-A- 3 059 804
- US-A- 3 613 934
- US-A- 4 526 015

## Description

### TECHNICAL FIELD OF THE INVENTION

The present invention belongs to the field of fluid storage systems and manufacturing methods of said fluid storage systems. Particularly, the present invention refers to a double-wall tank comprising a fluid channelling system and to a method for assembling a double-wall tank provided with a fluid channelling system.

### BACKGROUND OF THE INVENTION

Due to environmental reasons, challenges to reduce the use of fossil fuels must be increasingly faced. In this scenario, hydrogen produced on the basis of renewable energy is a reasonable candidate for efficient energy supply. Its high energy density makes it an emerging alternative fuel for aircraft applications.

In particular, hydrogen is an attractive fuel for high-altitude short-medium range aircraft because it contains about 6.2 times the energy per kilogram as compared with traditional hydrocarbon fuels. Therefore, in aircraft applications, said high specific energy of hydrogen may be a key enabler. However, practical considerations have largely prevented its use. While the specific energy of hydrogen is very high, the energy per unit volume is comparatively low. Liquid hydrogen enhances its energy density relative to gaseous form while allowing to reduce the mass of the tank required to confine the hydrogen within as a result of the lower pressure in liquid state. Liquid hydrogen at 20 K and 1 bar pressure has a density of 70 g/l compared to the 40 g/l of gaseous hydrogen at 88 K and 700 bar. Only cryo-compressed hydrogen has a higher density, with a value of 80 g/l at 38 K and 300 bar. According to these parameters, liquefied cryogenic form allows efficient storage at low pressure.

In this regard, LH2 cryotanks are one of the key components of the structure of future generations of heavy lift launch vehicles, space exploration structures and new green aircrafts. It is in aircraft where the greatest challenges lie in developing hydrogen storage systems as a result of the need for reduced weight in combination with good insulating and permeation properties. Some of the key challenges are geometry, temperature, permeation, and hydrogen embrittlement.

In order to take advantage of the high specific energy of hydrogen, the associated tanks should be preferably light weight and must be thermally insulated. The method of insulating a tank must deal with several types of heat transfer: conduction through solids, conduction and convention through gas, and radiation. Most methods of effecting high-performance insulation rely on a ultra-vacuum to nearly eliminate the conduction and convection gas heat transfer.

Taking into account the aforementioned conditions, known solutions currently in use, which are implemented in industries other than the aeronautical industry and are therefore not constrained by said high-demanding conditions in which aircrafts operate, consist of tanks that include structures and elements such as the following:
- Double-wall tanks comprising an outer jacket and an inner pressure vessel. These double-wall tanks are normally made from aluminium or steel, and are among the most conventional tanks used, mainly because they are the cheapest tanks to manufacture. However, they are also the heaviest type of tanks used for confining cryo-compressed hydrogen.
- Metallic pressure vessel/liner with a composite reinforcement overwrap. The metal and the composite material share structural load. Manufacturing costs with respect to the previous alternative are reduced and also the weight is significantly reduced.

Document US3613934A1 describes inner container support structure for dewar vessel. Document US4526015A1 describes a support for cryostat penetration tube.

### SUMMARY OF THE INVENTION

The present invention provides a double-wall tank according to claim 1 and a method for assembling a double-wall tank according to claim 14. In the dependent claims, embodiments of the invention are defined.

In a first inventive aspect, the invention provides a double-wall tank comprising an inner wall defining an inner chamber configured to house a fluid, an outer wall defining an outer chamber which houses said inner chamber within, and a fluid channelling system, wherein the fluid channelling system comprises:
- a first bushing arranged in an opening of the inner wall;
- a second bushing arranged in an opening of the outer wall;
- a bellows comprising a proximal end coupled, by means of a fluid-tight fit, to the second bushing, and a distal end projecting outwardly from the outer wall;
- a first pipe passing through the interior of the bellows, the second bushing and the first bushing;
- a first flange:
   ∘ coupled, by means of a fluid-tight fit, to the first pipe; and
   ∘ coupled, by means of a fluid-tight fit, to the distal end of the bellows, and
- a second flange:
   ∘ coupled, by means of a fluid-tight fit, to the first pipe; and
   ∘ coupled, by means of a fluid-tight fit, to the first bushing,
wherein the second bushing and the first pipe are separated from each other by a clearance.

The double-wall tank of the invention comprises three basic structural elements: an inner chamber intended for housing a fluid within, which is defined by the inner wall of the so called double-wall tank; an outer chamber, defined by the outer wall, which is arranged surrounding said inner chamber, said inner wall and outer wall being separated by a distance defined by an intermediate gap between them; and a fluid channelling system configured to allow the introduction or extraction of fluid into or from the inner chamber.

Also, from another structural approach to the double-walled tank, it may be understood that the inner wall defines an inner vessel, whereas the outer wall defines an outer jacket that surrounds and encloses said inner vessel within.

Since said inner wall and said outer wall are separated by said gap, despite the existence of anchorages, supporting/coupling or spacing means that maintain their relative position, it is possible that local relative displacements exist between said inner wall and outer wall due to the operating conditions of the tank. Such relative displacement may be due for example to vibrations or movements of the tank - in particular dynamic movements due to displacements of the fluid in the tank in response to accelerations, to thermal contractions/expansions, especially in the case where the inner chamber of the tank stores a cryogenic fluid, such as hydrogen, or to the difference in pressures that may exist between the inside of the inner chamber, the outside of the outer chamber, and the gap between them. More in particular, in a case where the gap is under vacuum conditions the inner chamber is subject to a positive pressure difference, since it is at a higher pressure than the outside of the inner chamber, i.e. the gap defined between the inner wall and the outer wall. On the other hand, said gap is subjected to a negative pressure difference, since it is at a lower pressure than the outside of the double-wall tank and the adjacent inner chamber.

To dampen and mitigate such distortions with respect to the relative position between the inner wall and the outer wall, the fluid channeling system of the double-wall tank of the present invention provides a flexible design. In particular, the fluid channelling system comprises a bellows arranged as part of the connection between the inner chamber and the outer chamber. Said bellows is capable of absorbing relative axial and angular displacements between the inner wall and the outer wall, thus minimising the structural loads on both walls and on a pipe crossing from the inside of the inner wall to the outside of the outer wall.

More in particular, regarding the connection of said bellows with respect to the inner wall and the outer wall, as well as to the sealing conditions to be met by the connection interfaces between the elements of the fluid channelling system, in order to maintain the safety and efficiency of the tank, said fluid channelling system of the double-walled tank of the invention comprises the following elements.

First, a first bushing is arranged in an opening of the inner wall, and a second bushing is arranged in an opening of the outer wall. In turn, the bellows comprises a proximal end coupled, by means of a fluid-tight fit, to the second bushing, and a distal end projecting outwardly from the outer wall, such that the bellows is installed outside the tank.

As for the openings, both on the inner and outer wall, where the first bushing and the second bushing are arranged, respectively, these openings can be provided, depending on the size of the opening, by trimming or drilling processes.

Also, machining tasks may be carried out in case it is necessary to provide particular geometries required for the precise coupling of the parts involved. Examples of such geometries may comprise providing an opening with a peripheral groove when any bushing comprises a stepped profile caused by a peripheral rim, or with a frustoconical shape to receive a frustoconical bushing. More in particular, regarding said frustoconical geometry of a bushing, in a case where the gap is under vacuum conditions, the minor base of the bushing is oriented towards the intermediate gap between the inner wall and the outer wall. In this way, the effect of the pressure difference between each side of the wall, presses the bushing and the inner wall against each other along their respective conical surfaces, thus promoting the contact between them and increasing the structural integrity of the resulting assembly as well as the tightness of the joint.

Alternatively, the process of providing an opening in the inner and/or outer wall portion encompass the manufacturing of the wall with such opening in it. In other words, the opening may be generated during the manufacturing process of the wall without having to further machine the wall to obtain such opening.

Regarding the arrangement of the bushings to the corresponding opening of the inner wall or the outer wall, it shall be understood that they are coupled by means of a fluid-tight fit. In this regard, examples of arrangements of the bushings in corresponding walls may comprise embedding at least a portion of the bushing in the wall, which provides a robust assembly, with optimal mechanical strength and sealing properties. More in particular, in examples of bushings comprising a peripheral rim, said peripheral rim may be embedded in a recess or groove provided around the opening in the wall.

For the actual conduction of fluid to/from inside the tank, the fluid channelling system comprises a first pipe passing through the interior of the bellows, the second bushing and the first bushing, said pipe being additionally installed in the second and first bushings.

Additionally, the fluid channelling system comprises a second flange coupled, by means of a fluid-tight fit, to the first pipe, and coupled, by means of a fluid-tight fit, to the first bushing.

Finally, to complete the fluid-tight connections between elements, the fluid channelling system comprises a first flange coupled, by means of a fluid-tight fit, to the first pipe, said first flange being further coupled, by means of a fluid-tight fit, to the distal end of the bellows. By virtue of said fluid-tight fit between the first flange and the first pipe, as well as between the first flange and the distal end of the bellows, fluid-tightness of the intermediate gap is ensured.

Additionally, the second bushing and the first pipe are separated from each other by a clearance. In particular, the second bushing and the first pipe are shaped and installed in such a way as to allow relative movement between the first pipe and the second bushing. The bellows also provides some freedom of expansion and contraction, at least along its axis and in parts angularly to this axis. This assembly therefore allows to absorb possible relative axial and angular displacements of the inner wall and the outer wall.

By virtue of the elements described above, and the way these elements are connected to each other, a fluid channelling system is provided for a double-wall tank that allows the introduction/extraction of fluid from the interior of the inner chamber of said tank by means of a pipe, without losing fluid-tight conditions of the inner chamber and of the intermediate gap between the inner wall and the outer wall, and absorbing possible relative axial and angular displacements between the inner wall and the outer wall.

Regarding the configuration of the double-wall tank, in one embodiment the inner chamber and the outer chamber have the same shape, wherein the outer chamber housing the inner chamber has a larger size.

In some embodiments, the chambers are closed chambers with a revolution geometry around a longitudinal axis.

In an embodiment, the inner wall and the outer wall comprise at least one dome-shaped portion, said portions being arranged facing one another, each dome-shaped portion having a convex outer side and a concave inner side.

It shall be understood that, regarding the orientation or disposition of the dome-shaped portions, the concave inner side will be oriented towards the interior of the tank.

From an architectural and geometric perspective, a dome-shaped structure, in the sense of the present invention, may be understood as a spherical cap, that is, as any portion of a sphere resulting from being cut by a plane. It may also have slightly different concave-convex shapes such as for example a paraboloid shape.

In a more particular embodiment, the elements of the fluid channelling system are arranged at the dome-shaped portions of the inner and the outer walls.

In a more particular embodiment, the fluid channelling system is arranged at the apex of the dome-shaped portions of the inner wall and the outer wall.

It shall be understood that the pole or apex of the dome-shaped portion, which as aforementioned is regarded as having a spherical cap shape, shall correspond to the point of maximum height in the dome-shaped portion above the plane with which a sphere is cut to obtain said spherical cap. In particular, the pole or apex will generally correspond to the end of the inner or outer chamber along a determined direction. The apex also correspond to the crossing of a longitudinal axis of the chambers with the chamber wall when the chamber has a revolution geometry around said longitudinal axis.

According to this embodiment, the first pipe crosses the inner wall and the outer wall through two respective openings provided, respectively, at the apex of the outer wall and the inner wall. Advantageously, this location is a point of high relative stiffness with respect to the other structural points of the dome-shaped portions. More in particular, in the case of an internal chamber and an external chamber with revolution geometry (and, more in particular, with a cylindrical section), where the apex corresponds to the crossing of the longitudinal axis of the chambers with the corresponding chamber wall, being the first pipe parallel to said longitudinal axis, longitudinal displacements predominate over the axial displacements in a direction transverse to said longitudinal axis. According to this embodiment, the installation and the operating conditions of the fluid channelling system elements for the absorption of relative displacements between the inner chamber and the outer chamber is simplified.

In a more particular embodiment, the elements of the fluid channelling system are arranged in a location around the apex of the dome-shaped portions of the inner wall and the outer wall.

Around the apex shall be understood as a position, taking into account the overall dimensions of the dome-shaped portion of the respective inner chamber and outer chamber, closer to the apex than to the periphery of such dome-shaped structure. As a consequence of the fluid channelling system not being installed in the apex itself, the radial and angular displacements to be absorbed grow in relation to the axial or longitudinal component. Depending on the foreseen operating conditions of the double-wall tank, this displaced location of the fluid-channelling system with respect to the apex can be taken into account for the design of the double-wall tank in order to deal with specific relative displacements.

In a particular embodiment, the double-wall tank comprises a plurality of fluid channelling systems provided at different points of the dome-shaped portions of the inner chamber and the outer chamber.

According to this embodiment, each channelling system comprises a pipe crossing through the outer wall and the inner wall, as well as a corresponding bellows provided at the outer wall for absorbing relative displacements.

In an embodiment, the channelling system comprises at least one bellows with multiple pipes installed within, said pipes crossing through the inner wall and the outer wall.

In an embodiment, at least a portion of the inner chamber and the outer chamber have a spherical shape.

In an embodiment, the two chambers have two dome-shaped portions disposed at two ends of a central cylindrical section.

In a more particular embodiment, at least one pipe is arranged passing through corresponding outer wall opening and inner wall opening, parallel to the axis of the cylindrical section of each chamber.

Regarding the materials used to manufacture the double-wall tank, in an embodiment, at least one of the inner wall or the outer wall is made of Fibre Reinforced Polymer ('FRP') material.

The use of FRP material for the inner and/or outer walls results in a much lighter double-wall tank compared to conventional tanks using metallic parts. Furthermore, the Gravimetric Index (GI), that is, the weight of liquid hydrogen vs. the weight of the tank is also improved compared to a metallic tank, reaching maximum values close to 50%, compared to typical values of metallic tanks ranging between 30-35%.

In a more particular embodiment, at least one of the inner wall or the outer wall is made of a thermoset carbon fibre reinforced polymer ('CFRP-TS').

In an embodiment, the intermediate gap between the inner wall and the outer wall is under vacuum conditions.

The intermediate gap between the inner wall and the outer wall is intended for providing thermal insulation to the inner chamber, which, in the case of containing a cryogenic fluid, will be exposed to extremely low temperatures.

The vacuum generated in said intermediate gap helps to reduce heat transfer and thereby reduce the boil-off of the fluid, and more in particular, of liquid hydrogen, liquid oxygen, liquid nitrogen or liquid argon which can be stored within the vessel.

Advantageously, by virtue of the reduced weight properties of the double-wall tank of the invention provided by the use of composite materials, as well as of the optimum insulation properties provided by the vacuum kept in the intermediate gap between the inner wall and the outer wall, the double-wall tank of the invention provides a solution to the greatest challenges in developing hydrogen storage systems which require high dormancy times necessary for aeronautics applications.

Regarding the vacuum condition in said gap between the inner wall and the outer wall, in the embodiment shown gas is pumped out of the inner chamber until reaching ultra-high vacuum (UHV) conditions. According to this vacuum regime, operating pressure is lower than about 100 nanopascals (1.0×10⁻⁷ Pa; 1.0×10⁻⁹ mbar; 7.5×10⁻¹⁰ Torr).

In an embodiment, the double-wall tank comprises a thermal insulation layer provided in the gap between the inner wall and the outer wall, said thermal insulation layer being arranged enveloping the inner wall.

Other particular embodiments of a thermal insulation layer comprise at least one of the following materials: aerogel, bubble wrap and/or foam material.

In an embodiment, the second flange is arranged at an end of the first pipe, wherein the inner chamber of the tank comprises a second pipe and a third flange, the third flange being coupled, by means of a fluid-tight fit, to the second pipe and to the second flange, such that a fluidic communication is established between the first pipe and the second pipe.

In an embodiment, the first bushing comprises a cylindrical main body and a rim projecting radially outwardly from the cylindrical main body, wherein said rim is arranged on an inner side of the inner wall facing the interior of the inner chamber.

In a case where the gap between the inner wall and the outer wall is under vacuum conditions, the direction of the operating pressures to which the inner wall and the outer wall, as well as the elements attached to them, are exposed, will be opposite. In particular, in the case of the inner wall, the pressure is positive from the inside of the inner chamber, towards the outside of the inner chamber, i.e. towards the intermediate gap between the inner wall and the outer wall. By arranging the rim on the side of the inner wall facing the interior of the inner chamber, the vacuum suction favours the efficiency of the connection tightness at the interfaces between the inner wall and the first bushing, as the pressure exerts a force to keep the contact between both elements. Furthermore, said rim serves as a mechanical obstacle that prevents the first bushing from uncoupling due to the effect of vacuum suction.

In an embodiment, the second bushing comprises a cylindrical main body and a rim projecting radially outwardly of the cylindrical main body, wherein said rim is arranged on an outer side of the outer wall facing the outside of the tank.

The outer wall is subjected to a negative pressure difference from the outside of the tank towards the intermediate gap between the inner wall and the outer wall. By arranging the rim on the side of the outer wall facing the outside of the tank, the vacuum suction favours the efficiency of the connection tightness at the interfaces between the outer wall and the second bushing, as the pressure exerts a force to keep the contact between both elements. Furthermore, said rim serves as a mechanical obstacle that prevents the second bushing from uncoupling due to the effect of vacuum suction.

In an embodiment, the first flange and the bellows are made of polymeric material.

In a more particular embodiment, the bellows is made of silicone reinforced with steel rings.

In a more particular embodiment, the first flange and the bellows are made of a thermoplastic material, such as PAEK, PEEK, PPS, or PEI.

In an embodiment, the second flange and/or the third flange are made of polymeric material.

In a more particular embodiment, the second flange and/or the third flange, are made of a thermoplastic material, such as PAEK, PEEK, PPS, or PEI.

Advantageously, thermoplastic-made elements can be welded together via induction welding or resistance welding.

In a more particular embodiment, the first flange is made of a thermoset material.

In a more particular embodiment, the second flange and/or the third flange are made of a thermoset material.

In a more particular embodiment, the first flange and the bellows are made of a FRP material.

In a more particular embodiment, the second flange and/or the third flange are made of a FRP material.

In an embodiment, the first flange and the distal end of the bellows are coupled by means of a staggered bolted joint.

In an embodiment, the second flange and the third flange are coupled by means of a staggered bolted joint.

In an embodiment, the joint interface between the first flange and the distal end of the bellows comprises first sealing means.

In an embodiment, the first sealing means comprise at least one between an O-ring and a gasket, preferably a cryogenic gasket.

In an embodiment, the joint interface between the second flange and the third flange comprises second sealing means.

In an embodiment, the second sealing means comprise at least one between an O-ring and a gasket, preferably a cryogenic gasket.

In an embodiment, the first flange and the bellows are metallic.

In an embodiment, the second flange and/or the third flange are metallic.

In an embodiment, the first flange and/or the third flange is made of aluminium.

Advantageously, metallic embodiments of the first, second, or third flange, alike composite solutions, contribute to ensuring mechanical performance and tightness in the joints to avoid leaks from within the inner chamber. Furthermore, said metallic structures entail reduced manufacturing, maintenance and replacement costs.

In an embodiment, the first bushing, the second bushing, the second flange and/or the bellows are made of INVAR.

INVAR is an austenitic nickel-iron alloy which has an extremely low coefficient of thermal expansion from -250°C to 200°C. Additionally, INVAR has good fatigue and mechanical properties at cryogenic temperatures.

Advantageously, the elements made of INVAR contribute to minimise the thermal loads arising due to the temperature gradients experienced on each element, as well as to avoid corrosion issues in their contact with the elements which may be made of a polymeric material.

In a case where at least one of the inner wall or the outer wall is made of a thermoset carbon fibre reinforced polymer ('CFRP-TS'), the INVAR bushing may be 'co-bonded' or 'co-cured' by means of an adhesive provided between the bushing and the corresponding opening of the CFRP-TS wall.

Additionally, a seal may be provided at the joint between the resin of the FRP material of the corresponding wall and the INVAR bushing coupled to said wall. Said seal ensures, in the particular case of the inner wall, the tightness of the inner vessel (i.e., the inner chamber intended for housing the fluid) and, in the particular case of the outer wall, the vacuum conditions maintained in the intermediate gap defined between the inner wall and the outer wall.

In an embodiment, the first flange is coupled to the first pipe by means of a crimping, welding or swaging process.

In an embodiment, the second flange is coupled to the first pipe by means of a crimping, welding or swaging process.

In an embodiment, the third flange is coupled to the second pipe by means of a crimping, welding or swaging process.

In an embodiment, at least one V-flange is arranged clamping the distal end of the bellows and the first flange.

In an embodiment, at least one V-flange is arranged clamping the second flange and the third flange.

In a more particular embodiment, at least one gasket is a cryogenic gasket.

In an embodiment, the proximal end of the bellows is welded to the second bushing.

In an embodiment, the second flange is welded to the first bushing.

In a second inventive aspect, the invention provides a method for assembling a double-wall tank according to any embodiment of the first inventive aspect, the method comprising the following steps:
i) providing an inner wall portion defining at least partially an inner chamber configured to house a fluid, wherein the inner wall portion comprises an opening;
ii) coupling a first bushing to the opening of the inner wall portion;
iii) providing an outer wall portion defining at least partially an outer chamber, said outer chamber being configured to house the inner chamber within, wherein said outer wall portion comprises an opening;
iv) coupling a second bushing to the opening of the outer wall portion;
v) providing a first pipe and a second flange coupled, by means of a fluid-tight fit, to the first pipe;
vi) introducing at least a portion of the first pipe and the second flange coupled to the first pipe through the first bushing coupled to the inner wall;
vii) coupling, by means of a fluid-tight fit, the second flange and the first bushing;
viii) introducing at least a portion of the first pipe through the second bushing coupled to the outer wall portion;
ix) coupling a bellows by a proximal end of the bellows, by means of a fluid-tight fit, to the second bushing coupled to the outer wall portion;
x) coupling, by means of a fluid-tight fit, a first flange to a portion of the first pipe projecting from the outer wall portion;
xi) coupling the bellows by a distal end of the bellows, by means of a fluid-tight fit, to the first flange coupled to the first pipe.

In some embodiments the process of providing an opening in the inner wall portion and/or in the outer wall portion, depending on the size of the opening, may include carrying out drilling and/or trimming tasks. Also, machining tasks may be carried out in case it is necessary to provide particular geometries required for the precise coupling of the parts involved. Examples of such geometries may comprise providing an opening with a peripheral groove when any bushing comprises a stepped profile caused by a peripheral rim, or with a frustoconical shape to receive a frustoconical bushing.

In other embodiments, the process of providing an opening in the inner and/or outer wall portion encompass the manufacturing of the wall with such opening in it. In other words, the opening is generated during the manufacturing process of the wall without having to further machine the wall to obtain such opening.

Regarding the coupling of the bushings to the corresponding opening of the inner wall portion or the outer wall portion, according to steps iii) and vi), it shall be understood that they are coupled by means of a fluid-tight fit.

In an embodiment, the method comprises coupling the inner/outer wall portion to at least one additional inner/outer wall portion to configure a complete inner/outer chamber. In an embodiment wherein the tank comprises a cylindrical portion with dome-shaped ends, the inner/outer wall portion is one dome-shaped end and the additional inner/outer wall portions are the cylindrical portion and the other dome-shaped end.

Examples of lay-up techniques regarded to manufacture the inner and/or outer wall portions provided in steps i) and iii), respectively, when they are made of FRP material are Automated Tape Laying (ATL) or Automated Fibre Placement (AFP). Both processes are functionally similar, comprising applying resin-impregnated fibre material ('prepregs'). 'Prepregs' are composite materials made from "pre-impregnated" fibres and a partially cured polymer matrix, such as epoxy or phenolic resin, or even thermoplastic. The matrix is used to bond the fibres together. The curing process induces chemical reactions that create extensive cross-linking between polymer chains to produce an infusible and insoluble polymer network. During cross-linking at sufficiently high temperatures, the material changes from a liquid via a gel into a glass-like solid.

However, each process is used differently to achieve specific structure construction goals to provide strength or stiffness where needed. Particularly, the use of one or the other mainly depends on the geometry complexity of the part to manufacture, in which AFP allows higher curvatures.

Filament winding techniques are also regarded as techniques suitable for manufacturing the inner and/or outer wall portions provided in steps i) and iii), respectively, when they are made of FRP material.

A 'filament winding' technique should be understood as a composite material structures manufacturing process used mainly for hollow parts, generally circular or oval section components, such as pipes and containers, and comprising winding tensioned reinforcing fibre filaments and/or tapes, impregnated with a thermosetting resin, on male mold or mandrel. Conventionally, said male mold is rotated, while a carriage moves horizontally, orienting the fibres in the desired pattern. Once the male mold is completely covered to the desired thickness and distribution pattern of filaments, the resin may be cured. Once the resin has been cured, the male mold is removed (unmold process), leaving the final product hollow.

Filament winding is a process that can be automated, where the tension of the filaments can be carefully controlled. The orientation of the filaments can also be carefully controlled so that the layers are laminated and oriented differently from the previous layer. The angle at which the fibre of the lower layers is established determines the properties of the final product.

Examples of 'tooling' used for manufacturing a FRP structure comprise:
- molds;
- vacuum bags;
- caul plates;
- heating equipment.

Typically, a number of composite plies or tapes are laid-up one upon the other on a mold, thus resulting in a stack of plies. In this regard, a 'ply' should be understood as a single continuous area of composite material to be laid on a form, where two plies in the same layer do not normally overlap. The laying-up of plies forms a stack which is known as a 'laminate' or as a whole 'preform'. The molds, mandrels or male molds should be regarded as shaping surfaces for manufacturing an item on the mold so that the item acquires the shape of the mold at least on its face in contact with the mold.

Additionally, the fibrous material reinforcement may be glass (for Glass Fibre Reinforcement Polymer, 'GRFP'), carbon (for Carbon Fibre Reinforcement Polymer, 'CRFP'), polymer fibres or any other conventional material used as reinforcement. Among them, carbon is preferred.

In an embodiment, in step vi) at least a portion of the first pipe and the second flange coupled to said first pipe are introduced through the first bushing coupled to the inner wall from the inside of the inner chamber to the outside.

In a more particular embodiment wherein the inner chamber comprises at least one distal dome-shaped portion disposed adjacent to a central cylindrical section, the portion of the first pipe and the second flange are introduced through the first bushing in a direction parallel to the longitudinal axis of the cylindrical section.

In an embodiment, the second flange and the first bushing are coupled to each other by a welding process.

In an embodiment, the first bushing and/or the second bushing are coupled to the corresponding opening of the inner and/or outer wall portion, according to steps ii) and/or iv), by at least one of the following processes:
- embedding the bushing within the corresponding inner or outer wall portion;
- co-curing the bushing within the corresponding inner or outer wall portion; or
- co-bonding the bushing within the corresponding inner or outer wall portion.

In an embodiment, the inner chamber comprises a second pipe arranged within, wherein a third flange is coupled to the second pipe by means of a fluid-tight fit, and wherein the method further comprises, after step vi), coupling the second flange and the third flange by means of a fluid-tight fit, such that a fluidic communication is established between the first and second pipes
All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic view of a transverse section of a portion of a double-wall tank according to an embodiment of the invention.
- Figure 2: This figure shows a schematic view of a transverse section of a portion of a double-wall tank according to an embodiment of the invention.
- Figure 3: This figure shows a schematic view of a transverse section of a portion of the outer wall of a double-wall tank according to an embodiment of the invention.

### DETAILED DESCRIPTION OF THE INVENTION

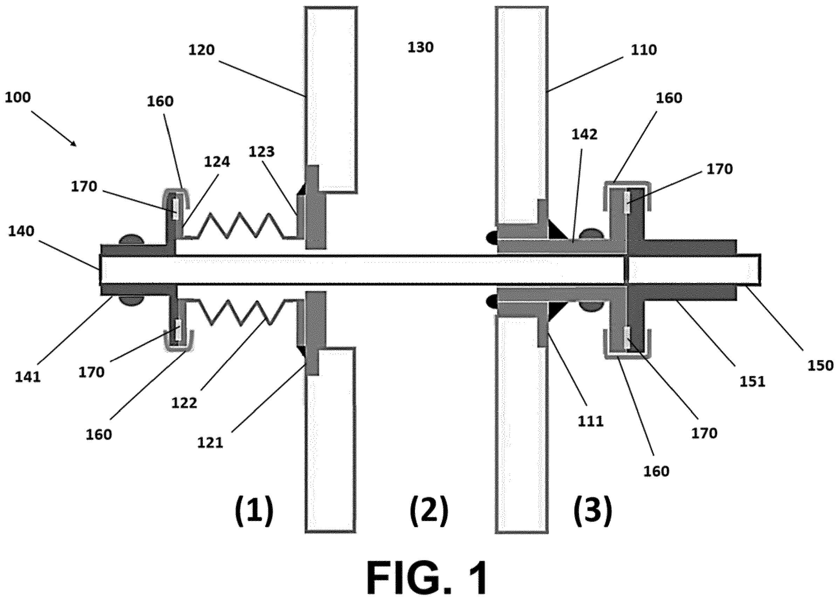

Figure 1 shows a schematic view of a transverse section of a portion of a double-wall tank according to an embodiment of the invention.

The double-wall tank shown comprises three basic structural elements:
- an inner chamber intended for housing a fluid within, and which is defined by the inner wall (110) of the so called double-wall tank;
- an outer chamber, defined by the outer wall (120), which is arranged surrounding said inner chamber, said inner (110) and outer (120) walls being separated a distance defined by an intermediate gap (130) between them, which, in the particular embodiment shown in Figure 1 is under vacuum conditions; and
- a fluid channelling system (100) configured to allow the introduction or extraction of fluid into or from the inner chamber.

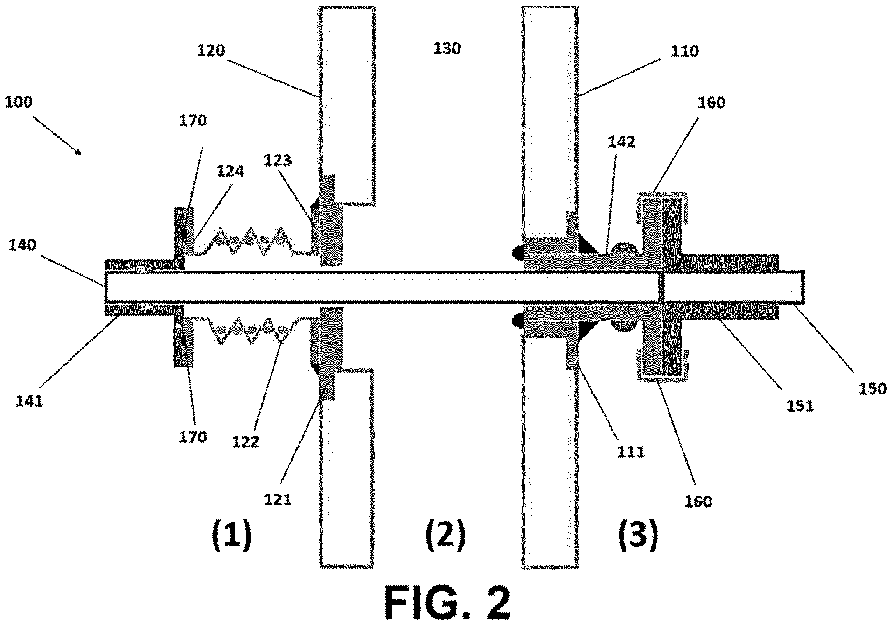

As can be seen (also in Figure 2), the structural elements shown divide the space in which the double-wall tank is located into three different zones: a first zone outside the double-wall tank, where the bellows (122) is located, referred to as zone (1), which may be at room temperature and pressure conditions; a second zone (2), which corresponds to the intermediate gap (130) arranged between the outer wall (120) and the inner wall (110), and which is under vacuum conditions, and finally a third zone (3) corresponding to the interior of the inner chamber, where the fluid to be stored may be housed, in this case hydrogen under cryogenic conditions.

Regarding the vacuum condition in said gap (130) between the inner wall (110) and the outer wall (120), the embodiment shown is operating under ultra-high vacuum (UHV) conditions. According to this vacuum regime, operating pressure is lower than about 100 nanopascals (1.0×10⁻⁷ Pa; 1.0×10⁻⁹ mbar; 7.5×10⁻¹⁰ Torr).

In particular, in the embodiment shown, the inner (110) and outer (120) walls are composed of a thermoset carbon fibre reinforced polymer ('CFRP-TS'). Since said inner wall (110) and said outer wall (120) are separated by an intermediate gap (130) located between them, it is possible that axial, radial and angular relative displacements occur between said inner (110) and outer (120) walls due to the operating conditions of the tank, which may result in vibration or movement of the tank.

It is also possible that such variation of the relative position of the inner wall (110) and the outer wall (120) is due to thermal contractions/expansions, especially in the case where the inner chamber of the tank stores a cryogenic fluid, such as hydrogen, as well as to the difference in pressures that may exist between the inside of the inner chamber, the outside of the outer chamber and the gap (130) between them.

As can be seen, the fluid channeling system (100) arranged in the portion of the double-wall tank shown in Figure 1 comprises a bellows (122) arranged for absorbing the relative axial, radial and angular displacements between the inner wall (110) and the outer wall (120) which may be due to the different temperature and pressure experienced on each wall (110, 120), thus ensuring the pass-through of the fluid channelling system (100) in a double-wall tank concept, such as the one shown, and minimising the structural loads on both walls.

In connection with the embodiment shown in Figure 1, axial displacement shall be understood as the approaching or receding movement of the inner (110) and outer (120) walls, between them, along a direction parallel to the longitudinal axis of the pipe (140) shown passing through the bellows itself (122) and through the inner (110) and outer (120) walls.

In turn, radial displacement will be interpreted as the movement of deflection of the inner (110) and outer (120) walls from the relative position shown (symmetrical with respect to said longitudinal axis of the pipe (140)), in a plane transverse to said longitudinal axis.

Finally, angular displacement shall be understood as a pitching movement of the inner vessel (i.e., the inner chamber) with respect to the outer jacket (i.e., the outer chamber), such that the longitudinal axis of said inner vessel rotates a certain angle with respect to the longitudinal axis of the outer jacket about an axis of rotation perpendicular to the plane of the cross-section shown.

In this regard, for the actual conduction of fluid to/from inside the double-wall tank, the fluid channelling system (100) comprises the first pipe (140) made of aluminium, which passes through the interior of the bellows (122), as well as through a first bushing (111) arranged in an opening of the inner wall (110), and through a second bushing (121) arranged in an opening of the outer wall (120).

Regarding the connection of said bellows (122) with respect to the inner (110) and outer (120) walls, as well as to the sealing conditions to be met by the connection interfaces between the elements of the fluid channelling system (100), in order to maintain the safety and efficiency of the tank, the bellows (122) comprises a proximal end (123) coupled, by means of a fluid-tight fit, to the second bushing (121).

More in particular, in the embodiment shown in Figure 1 both the proximal end (123) of the bellows (122) and the second bushing (121) are made of INVAR and welded to each other.

As can be seen, the second bushing (121) and the first pipe (140) are shaped so that a clearance is defined when the first pipe (140) passes through the second bushing (121).

Additionally, a second flange (142) is coupled, by means of a fluid-tight fit, for example, by means of a crimping, welding or swaging process, to the first pipe (140). Said second flange (142) is also coupled, by means of a fluid-tight fit, to the first bushing (111).

More in particular, in the embodiment shown in Figure 1 both the first bushing (111) and the second flange (142) are made of INVAR and are welded to each other.

Finally, to complete the necessary connections between elements to ensure the functionality, load transmission, and tightness of the double-wall tank, the fluid channelling system (100) shown in Figure 1 comprises a first flange (141) coupled by means, for example, of a crimping, welding or swaging process, to the first pipe (140).

Said first flange (141) is coupled to a distal end (124) of the bellows projecting outwardly from the outer wall (120).

As can be seen, in this embodiment a gasket or seal (170) is arranged at the coupling interface between said distal end (124) of the bellows (122) and the first flange (141). Given that, in the embodiment shown, the first flange (141) is made of aluminium and the distal end (124) of the bellows (122) is made of INVAR, a V- flange (160) is coupled clamping the distal end (124) of the bellows (122) and the first flange (141), so as to ensuring their contact along the coupling interface at all times.

Despite the difference in coefficient of thermal expansion (CTE) between the INVAR and aluminum elements, in the case of the coupling between the first flange (141) and the distal end (124) of the bellows (122) of the embodiment shown, this difference has no significant effect in the operation of the double-wall tank, since these elements are exposed during service to room temperature. Regarding the effects that the contraction/expansion of the diameter of the first pipe (140) may have, as a consequence of operating with fluid at cryogenic temperatures, the design of the fluid channelling system is made preferably taking into account such contraction/expansion effects so that there are no steps or gaps in the coupling section between the first pipe (140) and the inner wall (110).

Additionally, as can be seen, in this embodiment the first bushing (111) comprises a cylindrical main body and a rim projecting from one end of the cylindrical main body, wherein said rim is arranged on the side of the inner wall (110) facing the interior of the inner chamber.

By arranging the rim on the side of the inner wall (110) facing the interior of the inner chamber, the vacuum suction originated in the intermediate gap (130) favours the efficiency of the connection tightness at the interfaces between the inner wall (110) and the first bushing (111), as the pressure exerts a force to keep the contact between both elements. Furthermore, said rim serves as a mechanical obstacle that prevents the first bushing (111) from uncoupling due to the effect of vacuum suction.

In turn, the second bushing (121) shown in Figure 1 comprises a cylindrical main body and a rim projecting from one end of the cylindrical main body, wherein said rim is arranged on the side of the outer wall (120) facing the outside of the tank.

By arranging the rim on the side of the outer wall (120) facing the outside of the tank, the vacuum suction favours the efficiency of the connection tightness at the interfaces between the outer wall (120) and the second bushing (121), as the pressure exerts a force to keep the contact between both elements. Furthermore, said rim serves as a mechanical obstacle that prevents the second bushing (121) from uncoupling due to the effect of vacuum suction.

Additionally, the inner chamber of the double-wall tank may be provided with a plurality of system conduits, piping, or sub-chambers for the proper distribution of fluid supplied to the interior of the tank. In order to connect the fluid channelling system (100) to said system conduits provided inside the inner chamber, in the portion of the double-wall tank shown, it can be seen that the inner chamber of the tank comprises a second pipe (150) and a third flange (151) coupled to the second pipe (150) by means, for example, of a crimping, welding or swaging process. Said system conduits can be provided for example for feeding and/or distributing hydrogen within the inner chamber, as well as for carrying out hydrogen venting tasks.

In order to establish a fluidic communication between the first pipe (140) and the second pipe (150), while maintaining fluid tightness, the second flange (142) is arranged at an end of the first pipe (140) inserted in the inner chamber, and is coupled, by means of respective projecting portions, to the third flange (151). In particular, the second flange (142) and the third flange (151) comprise respective cylindrical main bodies with rims projecting from one end of the cylindrical main body.

Also, as can be seen, the corresponding coupling interfaces between the second flange (142) and the third flange (151), as well as of the first pipe (140) and the second pipe (150), respectively, coincide in a same plane perpendicular to the cross-sectional view of the double-wall tank shown. In this regard, in other embodiments, the end of the second pipe (150) is offset with respect to the coupling interface (i.e., the rim) of the third flange (151). That is, said end of the second pipe (150) is displaced to the right with respect to the embodiment shown in Figure 2 and is therefore set back inside said third flange (151).

In order to establish a fluidic communication between the first pipe (140) and the second pipe (150), while maintaining fluid tightness, the end of said first pipe (140) is advanced with respect to the coupling rim of the second flange (142), i.e. it projects from said coupling rim. More in particular, it is displaced to the right with respect to the embodiment shown in Figure 2, such that to couple to the second pipe (150), the portion of the first pipe (140) projecting from the second flange (142) is inserted inside the third flange (151).

In a further embodiment, the ends of both the first pipe (140) and the second pipe (150) are displaced to the left with respect to the embodiment shown, being in that case the end of the second pipe (150) the one that is inserted inside the second flange (142) to establish a fluidic communication with the first pipe (140).

According to these possible embodiments in which the coupling interfaces between the first pipe (140) and the second pipe (150) are offset with respect to the coupling interfaces between the second flange (142) and the third flange (151), the tightness of the joint between the first pipe (140) and the second pipe (150) is improved.

As can be seen, in an embodiment a gasket (170) is arranged at the coupling interface between the projecting portions of the third flange (151) and the second flange (142). Given that, in the embodiment shown, the third flange (151) is made of aluminium and the second flange (142) is made of INVAR, a V- flange (160) is coupled clamping them, so as to ensuring their contact along the coupling interface at all times.

Figure 2 shows a schematic view of a transverse section of a double-wall tank with a configuration similar to that of Figure 1, but where the composition and nature of the materials of the fluid channelling system (100) is different. Also, the embodiment shown in Figure 2 differs from that of Figure 1 in the process of establishing fluid tight connections between elements to ensure and maintain the load transmission and tightness at the corresponding coupling interfaces.

In particular, in the embodiment shown, the inner (110) and outer (120) walls are composed of a thermoset carbon fibre reinforced polymer ('CFRP-TS'). The rest of the elements shown, that is
- the first bushing (111) and the second bushing (121);
- the bellows (122);
- the first pipe (140) and the second (150) pipe; and
- the first flange (141), the second flange (142) and the third flange (151),
are made of a thermoplastic carbon fibre reinforced polymer ('CFRP-TP').

Regarding the first (111) and second (121) bushings, they are coupled to the first (110) and second (120) walls, respectively, by, for example,
- embedding the bushing (111, 121) within the corresponding inner (110) or outer (120) wall;
- co-curing the bushing (111, 121) within the corresponding inner (110) or outer (120) wall; or
- co-bonding the bushing (111, 121) within the corresponding inner (110) or outer (120) wall.

Starting to describe the connections between the aforementioned elements shown in Figure 2 from left to right, that is, in the fluid supply direction from the outside of the double-wall tank to the inside of the inner chamber, it can be firstly seen that the first flange (141) is attached to the first pipe (140) by, a welding process. More in particular, two opposite oval grey dots are depicted representing two welding points, respectively.

Said first flange (141) is, in turn, coupled to the distal end (124) of the bellows (122) by means of a staggered bolted joint. Additionally, a seal such as an O-ring or a cryogenic gasket (170) is provided at the joint interface between said distal end (124) of the bellows (122) and the first flange (141). Additionally, in the embodiment shown the bellow (122) comprises metallic reinforcement in the form of metallic rings. Said rings are depicted as two opposite dashed lines, composed of a series of five points arranged inside the acute angles of the sawtooth profile representing the bellows.

The proximal end (123) of the bellows (122) is coupled to the second bushing (121) by a welded joint with CFRP filament or thermoplastic resin by means of, for example induction welding or resistance welding.

In the very same manner, the first bushing (111) and the second flange (142) are welded to each other by a welded joint with CFRP filament or thermoplastic resin by means of, for example induction welding or resistance welding.

In turn, the second flange (142) and the third flange (151) are in mechanical contact by means of the implementation of a V-flange that keeps them fixed to each other.

Finally, the third flange (151) is coupled to the second pipe (150) by means of, for example, a crimping, welding or swaging process.

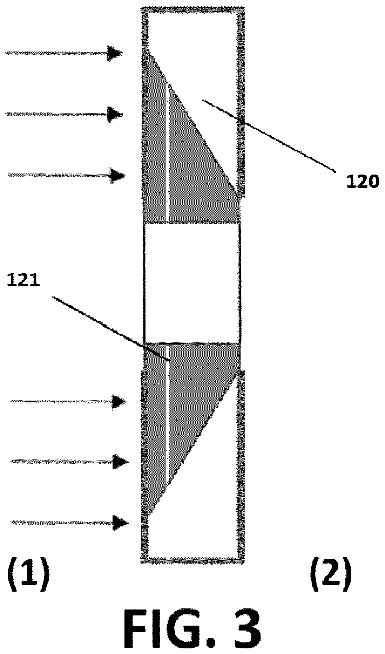

Figure 3 shows a schematic view of a transverse section of a portion of the outer wall (120) of a double-wall tank according to an embodiment of the invention. In particular, both the outer wall (120) itself and the bushing (121) shown arranged in an opening of the outer wall (120) are provided, respectively, with a frustoconical geometry.

As can be seen, said frustoconical geometry, in the cross-section shown, is represented as a trapezoidal shape of both the bushing (121) and the outer wall opening. In this trapezoidal shape, the major base is oriented towards the outer zone (1) of the double-wall tank, and the minor base is oriented towards the second zone (2), that is, the intermediate gap between the inner wall and the outer wall (120) which is under vacuum conditions. In this way, the effect of the pressure differential, which is shown with arrows pointing towards the outer surface of the outer wall (120), presses the bushing (121) and the outer wall (120) against each other along their respective conical surfaces, thus promoting the contact between them and increasing the structural integrity of the resulting assembly as well as the tightness of the joint.

Additionally, in relation to such coupling between the bushing (121) and the outer wall (120), in the embodiment shown, the bushing (121) is embedded in the outer wall (120). This integration is represented by means of part of the thick dark line delimiting the boundaries of the outer wall (120) extending and overlapping over a portion of the outer side of the bushing (121) (i.e., the major base of the trapezoidal shape). More specifically, one or more layers of a FRP laminate forming the outer wall (120) overlap on the outer face of the bushing (121).

The outer wall (120), in this particular case, is composed of a CFRP-TS. In this regard, according to the embodiment shown, both the process of embedding the bushing (121) and the provision of the conical geometry of the outer wall opening take place at intermediate stages of the manufacture and consolidation of said outer wall (120), which ultimately results in a robust assembly.

Finally, although the details of the conical surface of the outer wall (120) in contact along the same with the bushing (121) are not shown, in an embodiment said surface has a stepped profile, as a result of the sequential arrangement of layers of a laminate of the composite material, each successive layer of the laminate having displaced wider opening in it with respect to a previous layer to give rise to said frustoconical surface.

## Claims

1. A double-wall tank comprising an inner wall (110) defining an inner chamber configured to house a fluid, an outer wall (120) defining an outer chamber which houses said inner chamber within, and a fluid channelling system (100), wherein the fluid channelling system (100) comprises:
- a first bushing (111) arranged in an opening of the inner wall (110);
- a second bushing (121) arranged in an opening of the outer wall (120);
- a bellows (122) comprising a proximal end (123) coupled, by means of a fluid-tight fit, to the second bushing (121), and a distal end (124) projecting outwardly from the outer wall (120);
- a first pipe (140) passing through the interior of the bellows (122), the second bushing (121) and the first bushing (111);
- a first flange (141):
∘ coupled, by means of a fluid-tight fit, to the first pipe (140); and
∘ coupled, by means of a fluid-tight fit, to the distal end (124) of the bellows (122),
wherein the second bushing (121) and the first pipe (140) are separated from each other by a clearance,
**characterised by**
- a second flange (142):
∘ coupled, by means of a fluid-tight fit, to the first pipe (140); and
∘ coupled, by means of a fluid-tight fit, to the first bushing (111).

2. The tank according to claim 1, wherein the tank comprises an intermediate gap (130) between the inner wall (110) and the outer wall (120) which is under vacuum conditions.

3. The tank according to any of the previous claims, wherein the second flange (142) is arranged at an end of the first pipe (140), wherein the inner chamber of the tank comprises a second pipe (150) and a third flange (151), the third flange (151) being coupled, by means of a fluid-tight fit, to the second pipe (150) and to the second flange (142), such that a fluidic communication is established between the first pipe (141) and the second (150) pipe.

4. The tank according to any of the previous claims, wherein the first bushing (111) comprises a cylindrical main body and a rim projecting radially outwardly of the cylindrical main body, wherein said rim is arranged on an inner side of the inner wall (110) facing the interior of the inner chamber.

5. The tank according to any of the previous claims, wherein the second bushing (121) comprises a cylindrical main body and a rim projecting radially outwardly of the cylindrical main body, wherein said rim is arranged on an outer side of the outer wall (120) facing the outside of the tank.

6. The tank according to any of the previous claims, wherein:
the first flange (141) and the bellows (122); and/or
the second flange (142) and/or the third flange (151),
are made of polymeric material.

7. The tank according to claim 6, wherein:
the first flange (141) and the distal end (124) of the bellows (122); and/or
the second flange (142) and the third flange (151),
are coupled by means of a staggered bolted joint.

8. The tank according to any of the previous claims, wherein:
the joint interface between the first flange (141) and the distal end (124) of the bellows (122) comprises first sealing means; and/or
the joint interface between the second flange (142) and the third flange (151) comprises second sealing means.

9. The tank according to any of the previous claims, wherein:
the first flange (141) and the bellows (122); and/or
the second flange (142) and/or the third flange (151),
are metallic.

10. The tank according to claim 9, wherein:
the first flange (141) and/or the second flange (151) is made of aluminium, and/or
the first bushing (111), the second bushing (121), the second flange (142) and/or the bellows (122) are made of INVAR.

11. The tank according to any of claims 9 or 10, wherein:
the first flange (141) is coupled to the first pipe (140) by means of a crimping, welding or swaging process;
the second flange (142) is coupled to the first pipe (140) by means of a crimping, welding or swaging process; and/or
the third flange (151) is coupled to the second pipe (150) by means of a crimping, welding or swaging process.

12. The tank according to any of the previous claims, wherein at least one V-flange (160) is arranged:
clamping the distal end (124) of the bellows (122) and the first flange (141); and/or
clamping the second flange (142) and the third flange (151).

13. The tank according to any of the previous claims, wherein:
the proximal end (123) of the bellows (122) is welded to the second bushing (121), and/or
the second flange (142) is welded to the first bushing (111).

14. A method for assembling a double-wall tank according to any of claims 1-13, the method comprising the following steps:
i) providing an inner wall (110) portion defining at least partially an inner chamber configured to house a fluid, wherein the inner wall (110) portion comprises an opening;
ii) coupling a first bushing (111) to the opening of the inner wall (110) portion;
iii) providing an outer wall (120) defining at least partially an outer chamber, said outer chamber being configured to house the inner chamber within, wherein said outer wall (120) portion comprises an opening;
iv) coupling a second bushing (121) to the opening of the outer wall (120) portion;
v) providing a first pipe (140) and a second flange (142) coupled, by means of a fluid-tight fit, to the first pipe (140);
vi) introducing at least a portion of the first pipe (140) and the second flange (142) coupled thereto through the first bushing (111) coupled to the inner wall (110);
vii) coupling, by means of a fluid-tight fit, the second flange (142) and the first bushing (111);
viii) introducing at least a portion of the first pipe (140) through the second bushing (121) coupled to the outer wall (120) portion;
ix) coupling a bellows (122) by a proximal end (123) of the bellows (122), by means of a fluid-tight fit, to the second bushing (121) coupled to the outer wall (120) portion;
x) coupling, by means of a fluid-tight fit, a first flange (141) to a portion of the first pipe (140) projecting from the outer wall (120);
xi) coupling the bellows (122) by a distal end (124) of the bellows (122), by means of a fluid-tight fit, to the first flange (141) coupled to the first pipe (140).

15. The method according to claim 14, wherein the inner chamber comprises a second pipe (150) arranged within, wherein a third flange (151) is coupled to the second pipe (150) by means of a fluid-tight fit, and wherein the method further comprises, after step vi), coupling the third flange (151) and the second flange (142) by means of a fluid-tight fit, such that a fluidic communication is established between the first (141) and second (150) pipes.

## Patentansprüche

1. Doppelwandiger Tank, umfassend eine Innenwand (110), die eine Innenkammer definiert, die dazu ausgelegt ist, ein Fluid aufzunehmen, eine Außenwand (120), die eine Außenkammer definiert, die die Innenkammer aufnimmt, und ein Fluidleitsystem (100), wobei das Fluidleitsystem (100) umfasst:
- eine erste Buchse (111), die in einer Öffnung der Innenwand (110) angeordnet ist;
- eine zweite Buchse (121), die in einer Öffnung der Außenwand (120) angeordnet ist;
- einen Faltenbalg (122), der ein proximales Ende (123) umfasst, das mittels einer fluiddichten Verbindung mit der zweiten Buchse (121) gekoppelt ist, und ein distales Ende (124), das von der Außenwand (120) nach außen vorsteht;
- ein erstes Rohr (140), das durch das Innere des Faltenbalgs (122), der zweiten Buchse (121) und der ersten Buchse (111) hindurchgeführt ist;
- einen ersten Flansch (141):
∘ der mittels einer fluiddichten Verbindung mit dem ersten Rohr (140) gekoppelt ist; und
∘ der mittels einer fluiddichten Verbindung mit dem distalen Ende (124) des Faltenbalgs (122) gekoppelt ist, wobei die zweite Buchse (121) und das erste Rohr (140) durch einen Abstand voneinander getrennt sind, **gekennzeichnet durch**
- einen zweiten Flansch (142):
∘ der mittels einer fluiddichten Verbindung mit dem ersten Rohr (140) gekoppelt ist; und
∘ der mittels einer fluiddichten Verbindung mit der ersten Buchse (111) gekoppelt ist.

2. Tank nach Anspruch 1, wobei der Tank einen Zwischenspalt (130) zwischen der Innenwand (110) und der Außenwand (120) umfasst, der unter Vakuumbedingungen steht.

3. Tank nach einem der vorhergehenden Ansprüche, wobei der zweite Flansch (142) an einem Ende des ersten Rohrs (140) angeordnet ist, wobei die Innenkammer des Tanks ein zweites Rohr (150) und einen dritten Flansch (151) umfasst, wobei der dritte Flansch (151) mittels einer fluiddichten Verbindung mit dem zweiten Rohr (150) und mit dem zweiten Flansch (142) gekoppelt ist, sodass eine fluidische Verbindung zwischen dem ersten Rohr (141) und dem zweiten Rohr (150) hergestellt ist.

4. Tank nach einem der vorhergehenden Ansprüche, wobei die erste Buchse (111) einen zylindrischen Hauptkörper und einen Rand umfasst, der radial nach außen von dem zylindrischen Hauptkörper vorsteht, wobei der Rand auf einer Innenseite der Innenwand (110) angeordnet ist, die dem Inneren der Innenkammer zugewandt ist.

5. Tank nach einem der vorhergehenden Ansprüche, wobei die zweite Buchse (121) einen zylindrischen Hauptkörper und einen Rand umfasst, der radial nach außen von dem zylindrischen Hauptkörper vorsteht, wobei der Rand auf einer Außenseite der Außenwand (120) angeordnet ist, die der Außenseite des Tanks zugewandt ist.

6. Tank nach einem der vorhergehenden Ansprüche, wobei:
der erste Flansch (141) und der Faltenbalg (122); und/oder
der zweite Flansch (142) und/oder der dritte Flansch (151)
aus polymerem Material hergestellt sind.

7. Tank nach Anspruch 6, wobei:
der erste Flansch (141) und das distale Ende (124) des Faltenbalgs (122) und/oder
der zweite Flansch (142) und der dritte Flansch (151) mittels einer versetzten Schraubverbindung gekoppelt sind.

8. Tank nach einem der vorhergehenden Ansprüche, wobei:
die Verbindungsschnittstelle zwischen dem ersten Flansch (141) und dem distalen Ende (124) des Faltenbalgs (122) erste Dichtungsmittel umfasst; und/oder
die Verbindungsschnittstelle zwischen dem zweiten Flansch (142) und dem dritten Flansch (151) zweite Dichtungsmittel umfasst.

9. Tank nach einem der vorhergehenden Ansprüche, wobei:
der erste Flansch (141) und der Faltenbalg (122); und/oder
der zweite Flansch (142) und/oder der dritte Flansch (151)
metallisch sind.

10. Tank nach Anspruch 9, wobei:
der erste Flansch (141) und/oder der zweite Flansch (151) aus Aluminium gefertigt sind und/oder
die erste Buchse (111), die zweite Buchse (121), der zweite Flansch (142) und/oder der Faltenbalg (122) aus INVAR gefertigt sind.

11. Tank nach einem der Ansprüche 9 oder 10, wobei:
der erste Flansch (141) mit dem ersten Rohr (140) durch ein Crimp-, Schweiß- oder Stauchverfahren gekoppelt ist;
der zweite Flansch (142) mit dem ersten Rohr (140) durch ein Crimp-, Schweiß- oder Stauchverfahren gekoppelt ist; und/oder
der dritte Flansch (151) mit dem zweiten Rohr (150) durch ein Crimp-, Schweiß- oder Stauchverfahren gekoppelt ist.

12. Tank nach einem der vorhergehenden Ansprüche, wobei mindestens ein V-Flansch (160) angeordnet ist,
der das distale Ende (124) des Faltenbalgs (122) und des ersten Flansches (141) klemmt; und/oder
der den zweiten Flansch (142) und den dritten Flansch (151) klemmt.

13. Tank nach einem der vorhergehenden Ansprüche, wobei:
das proximale Ende (123) des Faltenbalgs (122) mit der zweiten Buchse (121) verschweißt ist, und/oder
der zweite Flansch (142) mit der ersten Buchse (111) verschweißt ist.

14. Verfahren zur Montage eines doppelwandigen Tanks nach einem der Ansprüche 1-13, wobei das Verfahren die folgenden Schritte umfasst:
i) Bereitstellen eines Abschnitts der Innenwand (110), der mindestens teilweise eine Innenkammer definiert, die dazu ausgelegt ist, ein Fluid aufzunehmen, wobei der Abschnitt der Innenwand (110) eine Öffnung umfasst;
ii) Koppeln einer ersten Buchse (111) mit der Öffnung des Abschnitts der Innenwand (110);
iii) Bereitstellen einer Außenwand (120), die zumindest teilweise eine Außenkammer definiert, wobei die Außenkammer dazu ausgelegt ist, die Innenkammer darin aufzunehmen, wobei der Abschnitt der Außenwand (120) eine Öffnung umfasst;
iv) Koppeln einer zweiten Buchse (121) mit der Öffnung des Abschnitts der Außenwand (120);
v) Bereitstellen eines ersten Rohrs (140) und eines zweiten Flansches (142), der mittels einer fluiddichten Verbindung mit dem ersten Rohr (140) gekoppelt ist;
vi) Einführen mindestens eines Abschnitts des ersten Rohrs (140) und des damit gekoppelten zweiten Flansches (142) durch die mit der Innenwand (110) gekoppelte erste Buchse (111);
vii) Koppeln des zweiten Flansches (142) und der ersten Buchse (111) mittels einer fluiddichten Verbindung;
viii) Einführen mindestens eines Abschnitts des ersten Rohrs (140) durch die zweite Buchse (121), die mit dem Abschnitt der Außenwand (120) gekoppelt ist;
ix) Koppeln eines Faltenbalgs (122) durch ein proximales Ende (123) des Faltenbalgs (122) mittels einer fluiddichten Verbindung mit der zweiten Buchse (121), die mit dem Abschnitt der Außenwand (120) gekoppelt ist;
x) Koppeln eines ersten Flansches (141) mit einem von der Außenwand (120) vorstehenden Abschnitt des ersten Rohrs (140) mittels einer fluiddichten Verbindung;
xi) Koppeln des Faltenbalgs (122) durch ein distales Ende (124) des Faltenbalgs (122) mittels einer fluiddichten Verbindung mit dem ersten Flansch (141), der mit dem ersten Rohr (140) gekoppelt ist.

15. Verfahren nach Anspruch 14, wobei die Innenkammer ein darin angeordnetes zweites Rohr (150) umfasst, wobei ein dritter Flansch (151) mit dem zweiten Rohr (150) mittels einer fluiddichten Verbindung gekoppelt ist, und wobei das Verfahren ferner nach Schritt vi) das Koppeln des dritten Flansches (151) und des zweiten Flansches (142) mittels einer fluiddichten Verbindung umfasst, sodass eine fluidische Verbindung zwischen dem ersten (141) und dem zweiten (150) Rohr hergestellt wird.

## Revendications

1. Réservoir à double paroi comportant une paroi intérieure (110) définissant une chambre intérieure conçue pour contenir un fluide, une paroi extérieure (120) définissant une chambre extérieure renfermant ladite chambre intérieure, et un système de canalisation de fluide (100), le système de canalisation de fluide (100) comportant :
- une première bague (111) disposée dans une ouverture de la paroi intérieure (110) ;
- une seconde bague (121) disposée dans une ouverture de la paroi extérieure (120) ;
- un soufflet (122) comprenant une extrémité proximale (123) accouplée, avec ajustement étanche, à la seconde bague (121), et une extrémité distale (124) faisant saillie vers l'extérieur depuis la paroi extérieure (120) ;
- un premier conduit (140) traversant l'intérieur du soufflet (122), de la seconde bague (121) et de la première bague (111) ;
- une première bride (141) :
∘ accouplée, avec ajustement étanche, au premier conduit (140) ; et
∘ accouplée, avec ajustement étanche, à l'extrémité distale (124) du soufflet (122),
la seconde bague (121) et le premier conduit (140) étant séparés l'un de l'autre par un jeu,
**caractérisé par**
- une deuxième bride (142) :
∘ accouplée, avec ajustement étanche, au premier conduit (140) ; et
∘ accouplée, avec ajustement étanche, à la première bague (111).

2. Réservoir selon la revendication 1, le réservoir comprenant un espace intermédiaire (130) entre la paroi intérieure (110) et la paroi extérieure (120) qui est sous vide.

3. Réservoir selon l'une quelconque des revendications précédentes, dans lequel la deuxième bride (142) est placée à une extrémité du premier conduit (140), dans lequel la chambre intérieure du réservoir comprend un second conduit (150) et une troisième bride (151), la troisième bride (151) étant accouplée, avec ajustement étanche, au second conduit (150) et à la deuxième bride (142), de telle sorte qu'une communication fluidique soit établie entre le premier conduit (141) et le second conduit (150).

4. Réservoir selon l'une quelconque des revendications précédentes, dans lequel la première bague (111) comprend un corps principal cylindrique et un rebord faisant saillie radialement vers l'extérieur du corps principal cylindrique, dans lequel ledit rebord est placé sur un côté intérieur de la paroi intérieure (110) faisant face à l'intérieur de la chambre intérieure.

5. Réservoir selon l'une quelconque des revendications précédentes, dans lequel la seconde bague (121) comprend un corps principal cylindrique et un rebord faisant saillie radialement vers l'extérieur du corps principal cylindrique, dans lequel ledit rebord est placé sur un côté extérieur de la paroi extérieure (120) faisant face à l'extérieur du réservoir.

6. Réservoir selon l'une quelconque des revendications précédentes, dans lequel :
la première bride (141) et le soufflet (122) ; et/ou
la deuxième bride (142) et/ou la troisième bride (151), sont en matériau polymérique.

7. Réservoir selon la revendication 6, dans lequel :
la première bride (141) et l'extrémité distale (124) du soufflet (122) ; et/ou
la deuxième bride (142) et la troisième bride (151), sont accouplées au moyen d'un joint boulonné décalé.

8. Réservoir selon l'une quelconque des revendications précédentes, dans lequel :
l'interface de jonction entre la première bride (141) et l'extrémité distale (124) du soufflet (122) comprend des premiers moyens d'étanchéité ; et/ou
l'interface de jonction entre la deuxième bride (142) et la troisième bride (151) comprend des seconds moyens d'étanchéité.

9. Réservoir selon l'une quelconque des revendications précédentes, dans lequel :
la première bride (141) et le soufflet (122) ; et/ou
la deuxième bride (142) et/ou la troisième bride (151), sont métalliques.

10. Réservoir selon la revendication 9, dans lequel :
la première bride (141) et/ou la deuxième bride (151) sont faites en aluminium, et/ou
la première bague (111), la seconde bague (121), la deuxième bride (142) et/ou le soufflet (122) sont faits en INVAR.

11. Réservoir selon l'une quelconque des revendications 9 et 10, dans lequel :
la première bride (141) est accouplée au premier conduit (140) par un procédé de sertissage, de soudage ou de rétreint ;
la deuxième bride (142) est accouplée au premier conduit (140) par un procédé de sertissage, de soudage ou de rétreint ; et/ou
la troisième bride (151) est accouplée au second conduit (150) par un procédé de sertissage, de soudage ou de rétreint.

12. Réservoir selon l'une quelconque des revendications précédentes, dans lequel au moins un collier en V (160) est disposé :
de sorte qu'il serre l'extrémité distale (124) du soufflet (122) et la première bride (141) ; et/ou
de sorte qu'il serre la deuxième bride (142) et la troisième bride (151).

13. Réservoir selon l'une quelconque des revendications précédentes, dans lequel :
l'extrémité proximale (123) du soufflet (122) est soudée à la seconde bague (121), et/ou
la deuxième bride (142) est soudée à la première bague (111).

14. Procédé d'assemblage d'un réservoir à double paroi selon l'une quelconque des revendications 1 à 13, le procédé comprenant les étapes suivantes :
i) préparer une partie paroi intérieure (110) définissant au moins partiellement une chambre intérieure conçue pour contenir un fluide, la partie paroi intérieure (110) comprenant une ouverture ;
ii) accoupler une première bague (111) à l'ouverture de la partie paroi intérieure (110) ;
iii) préparer une paroi extérieure (120) définissant au moins partiellement une chambre extérieure, ladite chambre extérieure étant conçue pour renfermer la chambre intérieure, ladite partie paroi extérieure (120) comprenant une ouverture ;
iv) accoupler une seconde bague (121) à l'ouverture de la partie paroi extérieure (120) ;
v) préparer un premier conduit (140) et une deuxième bride (142) accouplée, avec ajustement étanche, au premier conduit (140) ;
vi) introduire au moins une partie du premier conduit (140) et de la deuxième bride (142) accouplée à celui-ci à travers la première bague (111) accouplée à la paroi intérieure (110) ;
vii) accoupler, avec ajustement étanche, la deuxième bride (142) et la première bague (111) ;
viii) introduire au moins une partie du premier conduit (140) à travers la seconde bague (121) accouplée à la partie paroi extérieure (120) ;
ix) accoupler un soufflet (122), par une extrémité proximale (123) du soufflet (122), avec ajustement étanche, à la seconde bague (121) accouplée à la partie paroi extérieure (120) ;
x) accoupler, avec ajustement étanche, une première bride (141) à une partie du premier conduit (140) faisant saillie depuis la paroi extérieure (120) ;
xi) accoupler le soufflet (122), par une extrémité distale (124) du soufflet (122), avec ajustement étanche, à la première bride (141) accouplée au premier conduit (140).

15. Procédé selon la revendication 14, dans lequel la chambre intérieure comprend un second conduit (150) disposé à l'intérieur de celle-ci, dans lequel une troisième bride (151) est accouplée au second conduit (150) avec ajustement étanche, et le procédé comprenant, en outre, après l'étape vi), l'accouplement de la troisième bride (151) et de la deuxième bride (142) avec ajustement étanche, de sorte qu'une communication fluidique soit établie entre les premier (141) et second (150) conduits.
